# EUROPÄISCHE PATENTANMELDUNG

(11) **EP 2 597 341 A1**
(43) Veröffentlichungstag der Anmeldung: **29.05.2013**
(21) Anmeldenummer: 12189904.1
(22) Anmeldetag: 25.10.2012
(51) Int. Cl.: F16J 15/12, F16J 15/20

(54) **Dichtpackungsring sowie Dichtpackungssatz mit einer Vielzahl von Dichtpackungsringen**

(30) Priorität: 25.11.2011 DE 102011055740
(71) Anmelder: Kempchen Dichtungstechnik GmbH, 46147 Oberhausen (DE)
(72) Erfinder: Arndt, Rainer, 51381 Leverkusen (DE)
(74) Vertreter: Lorenz, Bernd Ingo Thaddeus

(57) **Zusammenfassung**

Die Erfindung betrifft einen Dichtpackungsring (1a) aus einem mehrlagig geschichteten Blech-Dichtstoff-Laminat mit Blechringen (2a) und dazwischen angeordnetem Dichtstoff (3a). Erfindungsgemäß weisen die Blechringe (2a) eine strukturierte Oberfläche auf, wobei die Blechringe (2a) und der Dichtstoff (3a) klebstofffrei verpresst sind. Des Weiteren erstreckt sich der Dichtstoff (3a) an der Innenseite des Dichtpackungsringes (1a) über die Blechringe (2a) hinaus. Gegenstand der Erfindung ist auch ein Dichtpackungssatz (5) mit einer Vielzahl von Dichtpackungsringen (1a, 1b, 1 c, 1d), wobei zumindest einer der Dichtpackungsringe (1a) wie zuvor beschrieben ausgestaltet ist. - Zu veröffentlichen mit Fig. 1.

## Beschreibung

Die Erfindung betrifft einen Dichtpackungsring aus einem mehrlagig geschichteten Blech-Dichtstoff-Laminat mit Blechringen und dazwischen angeordnetem Dichtstoff. Gegenstand der Erfindung ist auch ein Dichtpackungssatz, der zumindest einen solchen Dichtpackungsring aufweist. Der Dichtpackungsring bzw. der Dichtpackungssatz ist insbesondere für Armaturen vorgesehen, wobei der Dichtpackungssatz um eine drehbare Spindel herum angeordnet ist und diese gegen eine umliegende Büchse der Armatur abdichten. Insbesondere soll der Dichtpackungsring bzw. der damit gebildete Dichtpackungssatz auch bei hohen Drücken und Temperaturen zuverlässig einsetzbar sein. Die Blechringe bestehen vorzugsweise aus Edelstahl.

Bei der Abdichtung einer drehbaren Welle oder Spindel mit einem Dichtpackungssatz besteht die Anforderung, dass langfristig eine zuverlässige Abdichtung gewährleistet wird. Entsprechende Dichtpackungssätze sollen auch ausblassicher, das heißt gegen ein spontanes Versagen durch einen Verlust des Dichtstoffes geschützt sein. Gleichzeitig wird aber auch erwartet, dass sowohl die Haftreibung als auch die Gleitreibung zwischen dem Dichtpackungssatz und der Spindel bzw. Welle möglichst gering sind, um entsprechend auch die Losbrechkräfte und Stellantriebskräfte gering zu halten.

Die beiden Anforderungen sind genau gegenläufig, da die Standfestigkeit gegen hohe Drücke sowie niedrige Leckageraten nur über eine ausreichende Flächenpressung und demzufolge eine große Kraftbeaufschlagung des Packungssatzes zu erreichen sind. Dabei ist auch zu berücksichtigen, dass die Oberfläche der Spindel sowie der Büchse, in der der Dichtpackungssatz angeordnet ist, aufgrund von Ungenauigkeiten nicht genau zylindrisch sind. Gerade bei der gegenüber dem Dichtungspackungssatz drehbaren Spindel kann dies lokal zu sehr hohen Flächenpressungen und somit hohen Reibungskräften führen.

Bei einer hohen axialen Vorspannung des Dichtpackungssatzes kann auch eine Vorschädigung der einzelnen Dichtpackungsringe des Dichtpackungssatzes erfolgen, wobei kritische Spannungszustände den Dichtpackungsringen zu einem Spontanversagen im Betrieb führen können.

Ein Dichtpackungsring aus einem mehrlagig geschichteten Blech-Dichtstoff-Laminat mit Blechringen und dazwischen angeordnetem Dichtstoff wird von der Anmelderin unter der Typenbezeichnung RivaTherm K80S vertrieben. Durch die geschichtete Anordnung von Blech und Dichtstoff wird eine Ausblassicherheit, das heißt ein Schutz gegen ein spontanes Versagen, erreicht, weil auch unter hohen Belastungen ein Fließen des Graphits durch die Blechringe vermieden wird. Zusätzlich tragen die aus einer ebenen Folie gebildeten Blechringe auch zu einer verbesserten Abdichtung bei, weil diese eine Diffusionsbarriere darstellen.

Bei dem bekannten mehrlagig geschichteten Dichtpackungsring sind die Schichtringe aus Graphitfolie und Metallblech miteinander verklebt. In der Praxis besteht das Problem, dass sich dieser Kleber, insbesondere bei einer erhöhten Umgebungstemperatur, zersetzen kann, wobei dadurch das Gesamtvolumen des Dichtpackungsringes reduziert wird. Durch die Volumenverringerung kommt es auch zu einem deutlichen Verlust der Flächenpressung im Betrieb, weshalb bei der Montage von vornherein eine erhöhte Flächenpressung vorgesehen werden muss oder entsprechende Befestigungsmittel während des Betriebes nachgezogen werden müssen, um eine sichere Abdichtung zu erreichen.

Eine erhöhte anfängliche Pressung des Packungssatzes führt, wie bereits erläutert, zu einer erhöhten Gefahr einer bleibenden Vorschädigung. Ein Nachziehen der entsprechenden Befestigungsmittel ist dagegen mit einem zusätzlichen Aufwand verbunden, wobei auch ein Dichtungsverlust eintritt, wenn das Nachziehen unterbleibt.

Des Weiteren sind Dichtpackungsringe bekannt, die vollständig aus Dichtstoff bestehen. Ein entsprechender Dichtpackungsring wird von der Anmelderin unter der Produktbezeichnung RivaTherm K80 vertrieben. Eine Volumenreduzierung aufgrund von einer Zersetzung von Kleber wird bei einem solchen Dichtpackungsring nicht beobachtet. Allerdings besteht die Gefahr eines Spontanversagens bei hohen Drücken, weil der Dichtstoff nicht weiter stabilisiert ist.

Auch durch eine Kombination bekannter Dichtpackungsringe in einem Dichtpackungssatz können insbesondere bei hohen Temperaturen und großen Drücken die beschriebenen Nachteile nicht völlig vermieden werden.

Dichtpackungssätze mit einer Vielzahl von Dichtpackungsringen sind aus der EP 0 027 535 B1, der EP 0 494 064 B1 sowie der EP 0 672 815 B1 bekannt.

Aus der US 5 791 653 ist ein Dichtungsring bekannt, der eine Vielzahl von Graphitringen und metallischen Ringen aufweist, die in aufeinander folgender Schichtung miteinander verklebt sind. Die metallischen Ringe sind aus einer dünnen Folie mit einer Dicke von lediglich 10 µm bis 30 µm gebildet, wobei die Graphitringe nach innen geringfügig über die metallischen Ringe vorstehen.

Um eine Vereinfachung und bedarfsgerechte Anpassung einer Dichtungspackung zu ermöglichen, ist aus der DE 41 20 514 A1 bekannt, einzelne Verbunddichtungsringe mit jeweils einem Blechring und zumindest einer Dichtungsauflage lose aufeinander zu legen. Der lediglich eine Blechring als Träger des Verbunddichtungsringes kann durch Verankerungsfahnen einseitig oder beidseitig mit Dichtstoff in Form von Graphitringen verbunden sein.

Der vorliegenden Erfindung liegt die Aufgabe zugrunde, ein Dichtpackungsring sowie einen Dichtpackungssatz anzugeben, welche bei geringen Reibungskräften langfristig eine zuverlässige Abdichtung gewährleisten. Der Dichtpackungsring sowie der damit gebildete Dichtpackungssatz soll insbesondere auch bei hohen Temperaturen und großen Drücken zuverlässig einsetzbar sein.

Ausgehend von einem Dichtpackungsring mit den eingangs beschriebenen Merkmalen wird die Aufgabe erfindungsgemäß dadurch gelöst, dass die Blechringe strukturierte Oberflächen aufweisen, dass die Blechringe und der Dichtstoff klebstofffrei verpresst sind und dass sich der Dichtstoff an einer Innenseite des Dichtpackungsringes über die Blechringe hinauserstreckt.

Erfindungsgemäß wird damit ein klebstofffreier Dichtpackungsring bereitgestellt, so dass auch bei erhöhten Temperaturen von beispielsweise mehr als 250° C keine Volumenreduzierung aufgrund der Zersetzung von Klebstoff beobachtet wird. Um aber ohne ein Verkleben der einzelnen Schichten eine ausreichende Verbundfestigkeit zu erreichen, werden Blechringe eingesetzt, die eine strukturierte Oberfläche aufweisen. Die strukturierte Oberfläche ermöglicht bei dem Verpressen, dass sich der Dichtstoff mit den Blechringen verbindet. Eine Strukturierung der Oberfläche kann beispielsweise durch einfache Öffnungen gebildet werden, wobei dann bei dem Verpressen der Dichtstoff sich durch die Öffnungen hindurcherstreckt, wodurch eine zusammenhängende Dichtstoffstruktur gebildet wird.

Gemäß einer bevorzugten Ausgestaltung der Erfindung ist jedoch vorgesehen, dass die Blechringe aus Spieß- oder Klettblech gebildet sind. Bei einem Spieß- oder Klettblech werden aus der Ebene vorstehender Strukturen gebildet, an denen sich der Dichtstoff bei dem Verpressen verhaken kann. So werden beispielsweise nasenförmige Ausstanzungen gebildet und aus der Ebene herausgebogen, wobei dann der Dichtstoff sowohl an den herausgebogenen Strukturen als auch den seitlich dazu verbleibenden Öffnungen nach Art eines Formschlusses verankert wird.

Der Einsatz derartiger Spieß- und Klettbleche ist lediglich bei Dichtungen bekannt, die einen formstabilen Träger aus Blech aufweisen. Im Gegensatz dazu wird aber gemäß der vorliegenden Erfindung die Stabilität des gesamten Dichtpackungsringes nicht durch eine einzige Metallschicht, sondern durch die mehrschichtige Laminierung einer Vielzahl von Blechringen mit dazwischen angeordnetem Dichtstoff erreicht. So weist der Dichtpackungsring üblicherweise mehr als fünf Blechringe, insbesondere mehr als zehn Blechringe auf.

Des Weiteren ist erfindungsgemäß vorgesehen, dass sich der Dichtstoff an der Innenseite des Dichtpackungsringes über die Blechringe herauserstreckt. Dadurch wird erreicht, dass bei der Abdichtung einer Spindel oder Welle ein direkter Metall-Metall-Kontakt sicher vermieden wird. Auch bei einer Spindel oder Welle mit einer nicht exakt zylindrischen Oberfläche kann damit eine erhöhte Reibung sowie die Bildung von Riefen auf der Spindel bzw. Welle vermieden werden. Insbesondere die Bildung von Riefen kann in der Praxis zu einer erheblichen Leckage führen, weil diese bei einer auch längsbeweglich geführten Spindel einer Armatur schraubenförmig entlang der Spindeloberfläche verlaufen.

Sowohl die Vergrößerung des Innendurchmessers der Blechringe als auch die Strukturierung der Oberfläche der Blechringe bei einer Ausgestaltung aus Spieß- oder Klettblech führen zunächst dazu, dass die Diffusion durch die Dichtung erhöht ist. Während die Blechringe gemäß den bekannten Ausgestaltungen effektive Diffusionsbarrieren darstellen, werden bei der erfindungsgemäßen Ausgestaltung in Längsrichtung gesehen Bereiche bereitgestellt, in denen an der Innenseite des Dichtpackungsringes bzw. an Durchbrüchen der Blechringe kein Metall mit der entsprechend erhöhten Diffusionsfestigkeit vorhanden ist. Im Rahmen der Erfindung wird dieser Nachteil aber bewusst in Kauf genommen, weil die Dichtungseigenschaften auch bei einem langfristigen Betrieb erhalten bleiben und eine ausreichende Abdichtung des gesamten Dichtpackungssatzes durch die Kombination mit anders ausgestalteten Dichtpackungsringen erreicht werden kann.

Der Dichtstoff soll sich an der Innenseite des Dichtpackungsringes so weit über die Blechringe hinauserstrecken, dass bei den typischen Maßabweichungen der Spindel bzw. Welle einerseits ein Metall-Metall-Kontakt vermieden wird und andererseits die Stabilität sowie die Dichtheit des Dichtpackungsringes nicht übermäßigt beeinträchtigt werden. Vor diesem Hintergrund erstreckt sich der Dichtstoff an der Innenseite vorzugsweise um mehr als 0,5 mm und weniger als 2 mm über die Blechringe hinaus.

Als Dichtstoff sind beispielsweise Graphit und PTFE geeignet, wobei diese beiden Materialien oder andere Dichtstoffe in einem Gemisch vorliegen können.

Gegenstand der Erfindung ist auch ein Dichtpackungssatz mit einer Vielzahl von Dichtpackungsringen, wobei zumindest ein erster Dichtpackungsring wie zuvor beschrieben ausgestaltet ist.

Dieser erste Dichtpackungsring kann insbesondere als Endring des Dichtpackungssatzes vorgesehen sein.

Gemäß einer bevorzugten Ausgestaltung ist vorgesehen, den Dichtpackungssatz aus unterschiedlich ausgestalteten Dichtpackungsringen zusammenzusetzen. So kann beispielsweise ein zweiter Dichtpackungsring vorgesehen sein, der einen Kern aus Dichtstoff und an den einander gegenüberliegenden Ringflächen jeweils einen Blechring aufweist, wobei der Innendurchmesser der Blechringe vorzugsweise größer ist als der Innendurchmesser des Kerns aus Dichtstoff. Ein solcher zweiter Dichtpackungsring weist ähnliche Eigenschaften auf, wie ein Dichtpackungsring, der vollständig aus Dichtstoff besteht. Als Vorteil ergibt sich jedoch, dass die Blechringe als Diffusionsbarriere wirken und somit eine verbesserte Abdichtung gewährleisten. Zusätzlich wird der Kern aus Dichtstoff auch durch die außen aufliegenden Blechringe stabilisiert. Wie bei dem ersten Dichtpackungsring weisen die beiden Blechringe einen Innendurchmesser auf, der größer ist als der Innendurchmesser des Kerns, um auch hier einen direkten Metall-Metall-Kontakt zu vermeiden.

Als weiterer Dichtpackungsring kann ein dritter Dichtpackungsring vorgesehen sein, der wie der erste Dichtpackungsring aus einem mehrlagig geschichteten Blech-Dichtstoff-Laminat mit Blechringen und dazwischen angeordnetem Dichtstoff besteht, wobei die Blechringe strukturierte Oberflächen aufweisen und wobei die Blechringe und der Dichtstoff klebstofffrei verpresst sind. Allerdings ist gegenüber dem ersten Dichtpackungsring der Innendurchmesser vergrößert, so dass im montierten Zustand zwischen dem dritten Dichtpackungsring und einer in dem Dichtpackungssatz geführten Spindel oder Welle ein radialer Spalt verbleibt. Der Spalt beträgt vorzugsweise zwischen 0,5 mm und 2 mm.

Durch den Spalt entsteht innerhalb des Dichtpackungssatzes eine Tasche, welche bei dem Betrieb überflüssiges bzw. abgetragenes Graphit aufnehmen kann. Wenn sich also aufgrund der Reibung Graphit von den anderen Dichtpackungsringen löst, kann dieses lose Material in der Tasche aufgenommen werden, wodurch ein Verklemmen dieses überschüssigen Materials vermieden wird. Andererseits kann dieses lose Graphit bei axialen Bewegungen der Spindel bzw. Welle in entgegengesetzter Richtung wieder in den Bereichen der unmittelbar an der Spindel bzw. Welle anliegenden Dichtpackungsringe, also insbesondere in den Bereich des ersten Dichtpackungsringes und des zweiten Dichtpackungsringes, gelangen, wodurch also eine Art Nachschmierung erreicht wird. An den direkt anliegenden Dichtpackungsringen kann so auch bei einem langfristigen Betrieb die Bildung eines radialen Spaltes verhindert bzw. verzögert werden.

Schließlich kann der Dichtpackungssatz auch einen vierten Dichtpackungsring aufweisen, der vollständig aus Dichtstoff, also beispielsweise Graphit und/oder PTFE, besteht.

Der Dichtpackungssatz weist mehrere hintereinander angeordnete, vorzugsweise unterschiedliche Dichtpackungsringe auf. Geeignet ist beispielsweise eine Ausgestaltung, bei der von einem Ende des Dichtpackungssatzes hintereinander, vorzugsweise in unmittelbarer Folge, der erste Dichtpackungsring als Endring, der zweite Dichtpackungsring, der dritte Dichtpackungsring und der vierte Dichtpackungsring angeordnet sind. Wenn dann bei einer bevorzugten symmetrischen Ausgestaltung des Dichtpackungssatzes der vierte Dichtpackungsring in der Symmetrieebene liegt, umfasst der Dichtpackungssatz insgesamt sieben Dichtpackungsringe.

Die Erfindung wird im Folgenden anhand einer lediglich ein Ausführungsbeispiel darstellenden erläutert. Es zeigen:
- **Fig. 1**: einen ersten Dichtpackungsring,
- **Fig. 2**: einen Dichtpackungssatz, bei dem der erste Dichtpackungsring an beiden Seiten als Endring vorgesehen ist,
- **Fig. 3**: ein zweiter Dichtpackungsring des Dichtpackungssatzes gemäß Fig. 2,
- **Fig. 4**: ein dritter Dichtpackungsring des Dichtpackungssatzes gemäß der Fig. 2,

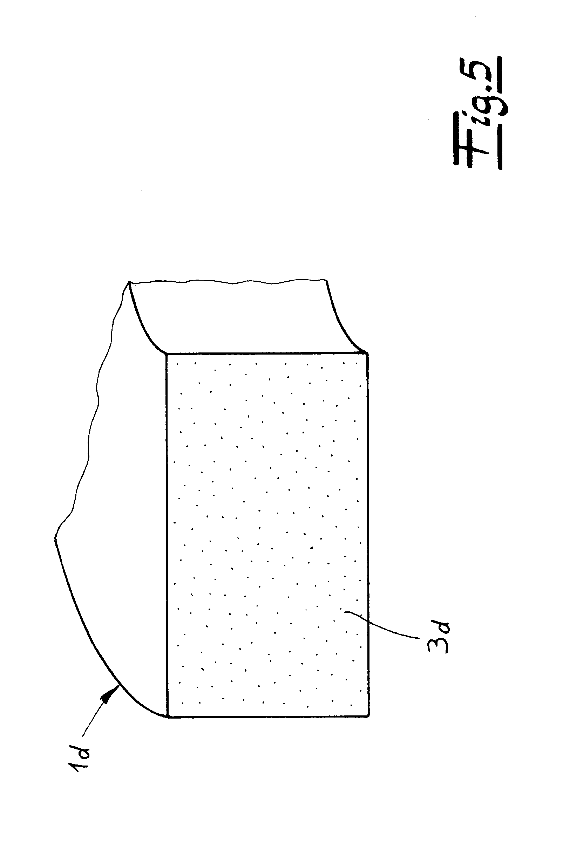

- **Fig. 5**: ein vierter Dichtpackungsring des Dichtpackungssatzes gemäß Fig. 2.

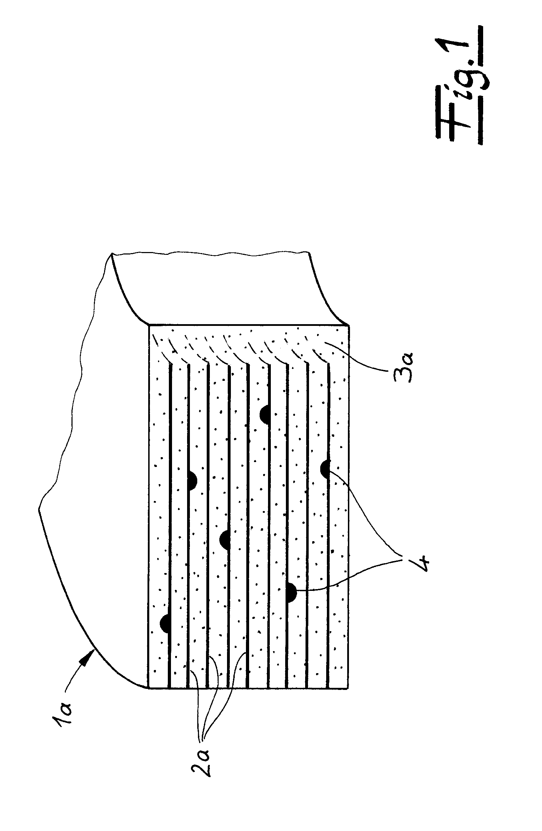

Die Fig. 1 zeigt einen Dichtpackungsring 1a aus einem mehrlagig geschichteten Blech-Dichtstoff-Laminat mit Blechringen 2a und dazwischen angeordnetem Dichtstoff 3a. Der Dichtpackungsring 1a ist aus den Blechringen 2a und dem Dichtstoff 3a klebstofffrei verpresst, wozu die Blechringe 2a eine strukturierte Oberfläche aufweisen. In dem Ausführungsbeispiel sind die Blechringe 2a aus Spieß- oder Klettblech gebildet, wobei Vorsprünge 4 herausgebogen sind und sich in den Dichtstoff 3a erstrecken. Des Weiteren ist zu erkennen, dass der Dichtstoff 3a sich an der Innenseite des Dichtpackungsringes 1a über die Blechringe 2a hinauserstreckt. Da der Dichtpackungsring 1a völlig ohne Klebstoff gebildet ist, tritt auch bei einer Erwärmung keine Volumenreduzierung aufgrund der Zersetzung seiner Bestandteile auf. Eine ausreichende Verbundfestigkeit wird dabei über die beschriebene Strukturierung der Blechringe 2a erreicht.

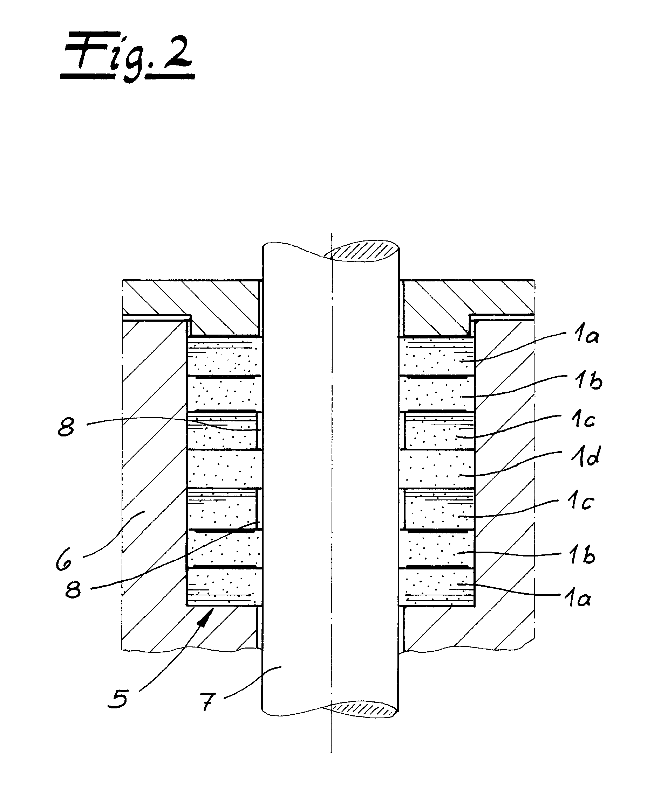

Die Fig. 2 zeigt einen Dichtpackungssatz 5 im montierten Zustand an einer Armatur, wobei der Dichtpackungssatz 5 innerhalb einer Büchse 6 angeordnet ist und eine drehbare sowie bei der Drehbewegung auch längsverschiebliche Spindel 7 aufnimmt. Der in der Fig. 1 dargestellte Dichtpackungsring 1a ist an beiden Enden des Dichtpackungssatzes 5 vorgesehen. Aus einer vergleichenden Betrachtung der Fig. 1 und 2 ist zu erkennen, dass nur der Dichtstoff 3a, der vorzugsweise zumindest teilweise aus Graphit besteht, an der Spindel 7 anliegt. Auch bei einer nicht vollständig zylindrischen Form der Spindel 7 kann ein direkter Kontakt mit den Blechringen 2a und damit ein direkter Metall-Metall-Kontakt vermieden werden.

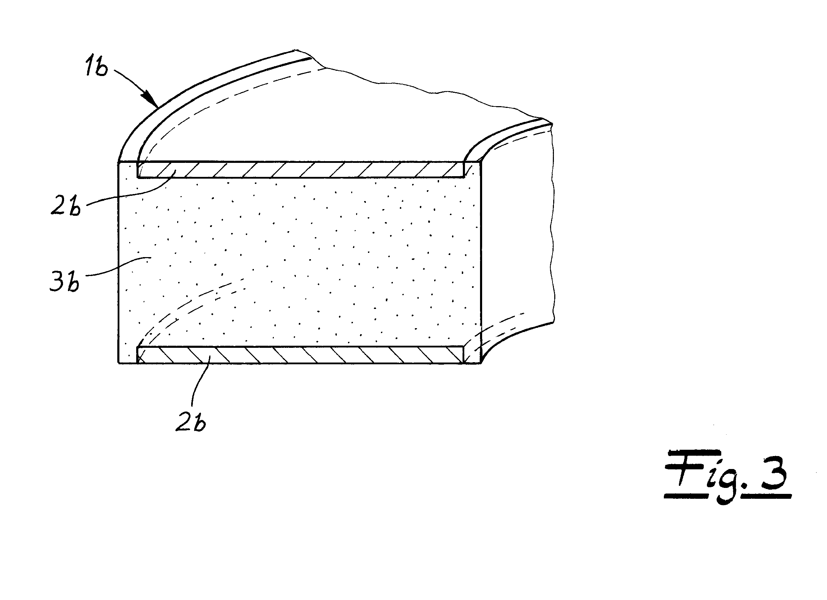

Der Dichtpackungssatz 5 umfasst insgesamt sieben Dichtpackungsringe 1a, 1 b, 1c, 1d. Der dabei von den Enden gesehen jeweils auf den ersten Dichtpackungsring 1a folgende zweite Dichtpackungsring 1b ist in der Fig. 3 dargestellt. Der zweite Dichtpackungsring 1 b weist einen Kern aus Dichtstoff 3b und an den gegenüberliegenden Ringflächen jeweils einen Blechring 2b auf. Die Blechringe 2b sind aus einem glatten Blech bzw. einer Metallfolie gebildet, wobei diese Blechringe 2b als Diffusionsbarriere zu einer hohen Dichtwirkung des zweiten Dichtpackungsringes 1b beitragen. Zusätzlich wird der aus Dichtstoff 3b, insbesondere Graphit oder einer Mischung von Graphit und PTFE, bestehende Kern auch stabilisiert. Auch der zweite Dichtpackungsring 1b liegt an seiner Innenseite an der Spindel 7 an. Da die Blechringe 2b des zweiten Dichtpackungsringes 1b einen erhöhten Innendurchmesser aufweisen, kann auch hier ein direkter Metall-Metall-Kontakt vermieden werden.

Das Übermaß der Blechringe 2a, 2b des ersten Dichtpackungsringes 1a sowie des zweiten Dichtpackungsringes 1 b beträgt vorzugsweise zwischen 0,5 mm und 2 mm.

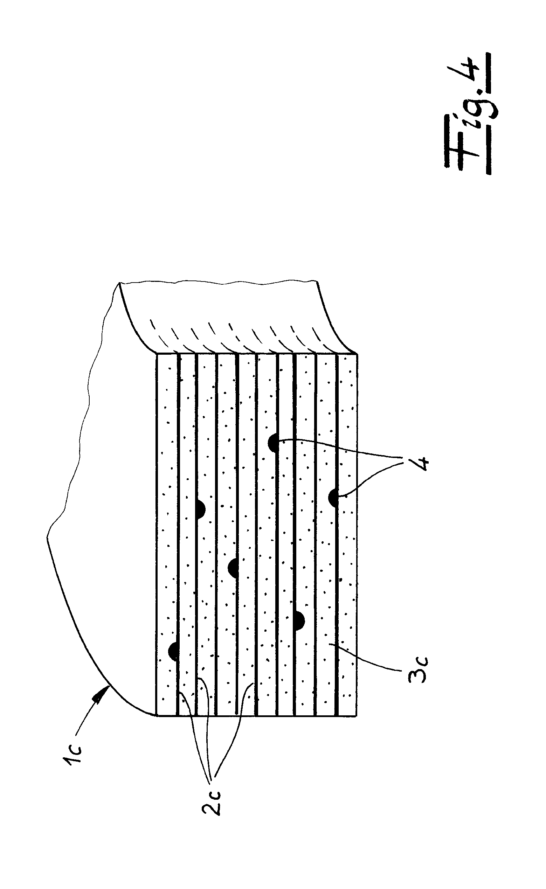

Gemäß der Fig. 2 folgt auf die zweiten Dichtpackungsringe 1 b jeweils ein dritter Dichtpackungsring 1c, der in der Fig. 4 im Detail dargestellt ist. Dieser dritte Dichtpackungsring 1c ist auch aus einem mehrlagig geschichteten Blech-Dichtstoff-Laminat mit Blechringen 2c und dazwischen angeordnetem Dichtstoff 3c gebildet. Auch hier weisen die Blechringe 2c eine strukturierte Oberfläche mit Vorsprüngen 4 auf, um bei einem klebstofffreien Verpressen der Blechringe 2c mit dem Dichtstoff 3c eine ausreichende Verbundfestigkeit sicherzustellen.

Der Fig. 2 ist des Weiteren zu entnehmen, dass die beiden dritten Dichtpackungsringe 1c einen größeren Innendurchmesser als die beiden ersten Dichtpackungsringe 1a und die beiden zweiten Dichtpackungsringe 1b aufweisen. Dadurch werden zwischen der Spindel 7 und den Dichtpackungsringen 1c Taschen 8 gebildet, in welchen beim Betrieb überflüssiger, abgeriebener Dichtstoff aufgenommen werden kann. Bei der Bewegung der Spindel 7 in Umfangsrichtung sowie in Längsrichtung kann dieser lose Dichtstoff wieder in den Bereich der anderen Dichtpackungsringe 1a, 1b, 1d gelangen, wodurch eine Nachschmierung erreicht wird.

Schließlich ist mittig ein vierter Dichtpackungsring 1d angeordnet, welche vollständig aus Dichtstoff 3d, insbesondere Graphit, bestehen.

Durch den erfindungsgemäßen Dichtpackungssatz 5 kann auch bei sehr hohen Drücken und Temperaturen eine zuverlässige Abdichtung bei einer geringen Reibung erreicht werden.

## Patentansprüche

1. Dichtpackungsring (1a) aus einem mehrlagig geschichteten Blech-Dichtstoff-Laminat mit Blechringen (2a) und dazwischen angeordnetem Dichtstoff (3a), **dadurch gekennzeichnet, dass** die Blechringe (2a) strukturierte Oberflächen aufweisen, dass die Blechringe (2a) und der Dichtstoff (3a) klebstofffrei verpresst sind und dass sich der Dichtstoff (3a) an einer Innenseite des Dichtpackungsringes (1a) über die Blechringe (2a) hinauserstreckt.

2. Dichtpackungsring (1a) nach Anspruch 1, **dadurch gekennzeichnet, dass** die Blechringe (2a) aus einem Spieß- oder Klettblech gebildet sind.

3. Dichtpackungsring (1a) nach Anspruch 1 oder 2, **dadurch gekennzeichnet, dass** der Dichtstoff (3a) zumindest teilweise aus Graphit besteht.

4. Dichtpackungsring (1a) nach einem der Ansprüche 1 bis 3, **dadurch gekennzeichnet, dass** sich der Dichtstoff (3a) an der Innenseite um mehr als 0,5 mm und weniger als 2 mm über die Blechringe (2a) hinauserstreckt.

5. Dichtpackungssatz (5) mit einer Vielzahl von unmittelbar aufeinander folgenden Dichtpackungsringen (1a, 1b, 1c, 1d), wobei zumindest ein erster Dichtpackungsring (1a) aus einem mehrlagig geschichteten Blech-Dichtstoff-Laminat mit Blechringen (2a) und dazwischen angeordnetem Dichtstoff (3a) besteht, **dadurch gekennzeichnet, dass** die Blechringe (2a) strukturierte Oberflächen aufweisen, dass die Blechringe (2a) und der Dichtstoff (3a) klebstofffrei verpresst sind und dass sich der Dichtstoff (3a) an einer Innenseite des Dichtpackungsringes (1a) über die Blechringe (2a) hinauserstreckt.

6. Dichtpackungssatz (5) nach Anspruch 5, **dadurch gekennzeichnet, dass** der erste Dichtpackungsring (1a) als Endring des Dichtpackungssatzes (5) vorgesehen ist.

7. Dichtpackungssatz (5) nach Anspruch 5 oder 6, **gekennzeichnet durch** einen zweiten Dichtpackungsring (1 b), der einen Kern aus Dichtstoff (3b) und an den einander gegenüberliegenden Ringflächen jeweils einen Blechring (2b) aufweist, wobei der Innendurchmesser der Blechringe (2b) größer ist als der Innendurchmesser des Kerns aus Dichtstoff (3b) .

8. Dichtpackungssatz (5) nach einem der Ansprüche 5 bis 7, **dadurch gekennzeichnet, dass** ein dritter Dichtpackungsring (1c) vorgesehen ist, wobei der dritte Dichtpackungsring (1c) aus einem mehrlagig geschichteten Blech-Dichtstoff-Laminat mit Blechringen (2c) und dazwischen angeordnetem Dichtstoff (3c) besteht, wobei die Blechringe (2c) strukturierte Oberflächen aufweisen, wobei die Blechringe (2c) und der Dichtstoff (3c) klebstofffrei verpresst sind und wobei der Innendurchmesser des dritten Dichtpackungsringes (1 c) größer als der Innendurchmesser des ersten Dichtpackungsringes (1a) ist.

9. Dichtpackungssatz (5) nach einem der Ansprüche 5 bis 8, **gekennzeichnet durch** einen vierten Dichtpackungsring (1d) der vollständig aus Dichtstoff (3d) besteht.

10. Dichtpackungssatz (5) nach Anspruch 8 und 9, **dadurch gekennzeichnet, dass** von einem Ende des Dichtpackungssatzes (5) hintereinander der erste Dichtpackungsring (1a) als Endring, der zweite Dichtpackungsring (1 b), der dritte Dichtpackungsring (1c) und der vierte Dichtpackungsring (1d) angeordnet sind.

11. Dichtpackungssatz (5) nach einem der Ansprüche 1 bis 10, **gekennzeichnet durch** einen symmetrischen Aufbau.
